Europäisches Patentamt

European Patent Office

Office européen des brevets

(19)

(11) Publication number: **0 044 511**

A2

(12) **EUROPEAN PATENT APPLICATION**

(21) Application number: **81105527.6**

(22) Date of filing: **14.07.81**

(51) Int. Cl.³: **C 08 F 6/12**

(30) Priority: **23.07.80 JP 101584/80**

(43) Date of publication of application:
**27.01.82 Bulletin 82.4**

(84) Designated Contracting States:
**DE FR GB IT NL**

(71) Applicant: SUMITOMO CHEMICAL COMPANY, LIMITED
15 Kitahama 5-chome Higashi-ku
Osaka-shi Osaka-fu(JP)

(72) Inventor: Harada, Hiroyuki
135, Iriyamazu
Ichihara-shi(JP)

(72) Inventor: Takao, Hiroyoshi
7-16, Kurosunadai-3-chome
Chiba-shi(JP)

(72) Inventor: Yamamoto, Keisaku
3-14, Aobadai-5-chome
Ichihara-shi(JP)

(72) Inventor: Umezu, Takesi
135, Iriyamazu
Ichihara-shi(JP)

(74) Representative: Patentanwälte
Henkel-Kern-Feiler-Hänzel
Möhlstrasse 37
D-8000 München 80(DE)

(54) **Process for recovering rubberlike polymer from solution thereof.**

(57) In a process for recovering a rubberlike copolymer from a hydrocarbon or halogenated hydrocarbon solution containing the copolymer, the solution being obtained by copolymerizing ethylene and an α-olefin represented by the general formula $CH_2 = CHR$, wherein R is a linear or a branched alkyl group of 1 to 6 carbon atoms, or by copolymerizing these and a non-conjugated linear or cyclic diene, in the presence of a catalyst containing an organoaluminum compound and a vanadium compound, the improvement which compriese dispersing the rubber like copolymer solution in hot water in the presence of a block type polyether compound represented by the general formula $HO(C_2H_4O)_a(C_3H_6O)_b(C_2H_4O)_cH$, wherein a, b and c independently represent numbers of 10 to 1000, to strip the solution and separating the resulting granular copolymer from water to recover it in a granular form.

EP 0 044 511 A2

- 1 -

PROCESS FOR RECOVERING RUBBERLIKE

POLYMER FROM SOLUTION THEREOF

The present invention relates to a process for recovering a rubberlike high molecular compound from an organic solvent solution thereof.

There is a method for recovering a copolymer from an organic solvent solution thereof, which method comprises introducing an organic solvent solution of a polymer into an aqueous medium kept at a temperature above the boiling point of said organic solvent or that of an azeotropic mixture thereof with water, whereby said solvent is distilled off and the polymer is dispersed in said aqueous medium to isolate the residual polymer. This method is well known as a steam stripping method and utilized in processes such as the recovery of elastomers including copolymers of ethylene and α-olefin (hereinafter referred to as EPM) and copolymers of ethylene, α-olefin, and non-conjugated diene (hereinafter referred to as EPDM) from organic solvents. The elastomer particles contained in an aqueous phase by the distillation of organic solvent are liable to coagulate, stick to walls of the vessel and to the stirrer, and agglomerate into lumps, causing considerable difficulties in solvent removal and in transfer and in drying of the polymer. In particular, when molecular weight of the EPM or EPDM is lower or ehtylene content therein is higher, the more cohesion occurs among particles of the elastomer and it becomes very difficult to obtain good crumbs thereof.

This invention relates to a process for recovering the above-mentioned polymer from a solution thereof by steam stripping, wherein the polymer is obtained as crumbs in the form of aqueous slurry. The aqueous slurry of the rubberilike polymer is usually made up into the product via the steps of transfer, separation, and drying. In this case properties of the crumb particles are of great importance. For instance, if stickiness of the crumb particles is high, troubles are caused in these steps by the adhesion to vessel walls and by the cohesion among the crumb particles, so that a product of good quality cannot be obtained.

The particle size of the crumbs obtained by the steam stripping method is affected by the amount of water in the stripper, the type and revolution speed of the stirrer, the type and position of the nozzle to feed the polymer solution, and the temperature, pressure, and period of stripping. It is possible to obtain such crumbs that give no adverse effect on the steps after stripping by properly selecting these operating conditions. However, properties of the polymer crumbs obtained by stripping much depend upon the composition and molecular weight of the polymer, and good crumbs cannot be obtained, in many cases, by the selection of the above-mentioned operating conditions alone. In particular, it is very difficult to obtain good crumbs in the case of a polymer having a low molecular weight of $0.9 - 1.3$ in terms of $[\eta]$ (as measured in xylene at $70^{\circ}C$) or having an ethylene content of $70 - 85\%$ by weight. On the other hand, EPM and EPDM of low molecular weight as well as of high ethylene cotent are very valuable for industrial applications·such as those to wires, horses, modifiers for plastics, etc., because they exhibit higher melt flow and also higher mechanical strength. Accordingly, it is industrially very worthy to develop a technique allowing arbitrary production of any of EPM or EPDM covering wide ranges of molecular weight and composition. The process of this invention is especially effective in the recovery of such polymers as mentioned above of low molecular weight and high ehtylene content.

Addition of a suitable dispersing agent in the stripping of a polymer solution is known to give good crumb particles. For example, a combination of TAMOL-731 (sodium salt of a carboxylated polyelectrolyte, supplied by Rohm & Haas Co.) and calcium chloride is known as one of the most effective dispersing agents for polybutadiens. However, an additive for the stripping is unsatisfactory if it acts only as a simple dispersing agent, so that the followings are necessary:

(1) Not to cause foaming in the stripping tank, poor feed into dryer, and a decrease in the reacting capacity;

(2)   not to cause the contamination of unreacted monomers and of solvent to be recovered, and a decrease in polymerization activity of the catalyst;

(3)   not to give a bad effect on physical properties of the product rubber; and

(4)   not to cause the discharge of large amounts of organic substances together with the waste water.

Since the discharge of large amounts of organic substances together with the waste water causes a water pollution, it is very important in recent years to develop a technique to control it to a level as low as possible.

In order to develop a dispersing agent to satisfy the above-mentioned requirements, the present inventors have made extensive studies and, as a result, have accomplished this invention.

An object of the present invention is to provide a process for obtaining crumbs of a rubberlike polymer having favorable particle sizes, when isolating the rubberlike polymer in the form of crumbs from a solution thereof by steam stripping and simultaneously recovering the solvent and unreacted monomers.

Other objects and advantages of the present invention will be apparent from the following description.

According to the present invention, there is provided a process for recovering a rubberlike polymer which comprises polymerizing hydrocarbon monomers in an inert solvent in the presence of a catalyst containing an organometallic compound and a transition metal compound and recovering thereafter the solvent and unreacated monomers from the polymer solution by steam stripping method in the presence of a dispersing agent to obtain the polymer as an aqueous slurry, wherein it is characterized in that, as said dispersing agent, a block type polyether compound is used at a low concentration.

The dispersing agent used in the present invention is a block type polyether compound represented by the formula $HO(C_2H_4O)_a(C_3H_6O)_b(C_2H_4O)_cH$, in which a, b and c independently represent numbers of 10 to 1000, and it is one of the compounds generally known as a nonionic surface active agent.

As the prior art relating to the addition of a dispersing agent in steam stripping a rubberlike polymer solution, the following arts are known: (1) a method comprising a combined use of (i) zinc oxide, (ii) a ligninsulfonate, (iii) a compound selected from water-soluble polymeric substances each having plural carboxyl groups, and (iv) ions of metals such as calcium, iron, cobalt, or nickel (Japanese Patent Publication No. 17497/1962), (2) a method comprising a combined use of anionic and cationic surfactants (Japanese Patent Publication No. 21346-1969, (3) a method comprising a combined use of (i) di or trivalent metal ions, (ii) a natural or synthetic petroleum sulfonate which forms a slightly water-soluble compound or a formaline condensate of said sulfonate, and (iii) a water-soluble inorganic salt of a di or trivalent metal (Japanese Patent Publication No. 6549/1970), (4) a method comprising previously suspending an emulsifiable high molecular substance comprising (i) a water-insoluble or slightly water-soluble vinyl acetate homopolymer or copolymer, (ii) a partially saponified material thereof, or (iii) a polyacrylic ester (Japanese Patent Publication No. 6551/1970), (5) a method comprising previously emulsifying a polymer solution with an aqueous solution of a surfactant of polyethylene alkyl ether type or of polyoxyethylene alkylphenol ether type (Japanese Patent Publication No. 5473/1971), and (6) a method comprising a use of a polyethylene glycol condensate of a saturated or unsaturated $C_{12}$-$C_{18}$ aliphatic carboxylic acid, a hydroxy carboxylic acid of the same type, glyceride of said hydroxycarboxylic acid, or a hydrolized product thereof (Japanese Patent Publication No. 12193/1973). Polycarboxylic acids and derivatives thereof are industrially unfavorable because they are expensive and in addition the combined use thereof with metal ions complicates the operations. Ligninsulfonic acids, polycarboxylic acids, and polyoxyethylene alkyl ethers are inevitably required to use in considerable amounts in order to obtain good crumbs, and in this case the stripping effect is reduced because a foaming occurs in the stripping. Moreover, the dispersant remained in the polymer gives adverse effects on the polymer obtained and a large amounts of organic substances are discharged into the waste water. This invention provides a stripping method free from the above-mentioned disadvantages.

The process of the present invention will be explained more concretely hereinbelow.

As the rubberlike high molecular compound used in the present invention, there are copolymers of ehtylene and α-olefin and copolymers of ethylene, α-olefin and non-conjugated diene. The α-olefins usable for the copolymerization with ehtylene include propylene, 1-butene, 4-methylpentene-1, etc., and as the diene components, there are used 5-ethylidene-2-norbornene, dicyclopentadiene, 1,4-hexadiene, etc.

According to the process of the present invention, steam stripping treatment can be satisfactorily applied to the EPM and EPDM covering such wide ranges as those having 85 - 20% by weight in ethylene content and 0.9 - 4.0 in an intrinsic viscosity ($[\eta]$: measured in xylene at 70°C). The catalysts used for the production of such EPM or EPDM are well known as Ziegler-Natta catalysts, which contain an organometallic compound and a transition metal compound. Any person skilled in the art can select the combination and the like of these catalyst components with ease according to purposes.

The disperssing agent used in the present invention is a block type polyether compound repesented by the formula $HO(C_2H_4O)_a(C_3H_6O)_b(C_2H_4O)_cH$, in which a, b and c independently represent numbers of 10 to 1000, and it is one of the compounds generally known as a nonionic surface active agent.

With respect to compounds of this type, there are known various structures of compounds which are different in a molecular weight of the polypropylene glycol segnment in the molecular formula and different in contents of the polyethylene glycol segments therein. In the process of the present invention, though any of these polyether compounds may be used, preferred ones are those having a molecular weight of 600 to 5000, particularly 1000 to 3000 in the polypropylene glycol segment and the content of the polyethylene glycol segment of 30 to 95% by weight. The amount of the above-mentioned dispersing agent to be used, can be varied in a wide range, but it is 3 to 200 ppm, preferably 5 to 100 ppm, in view of the shape of crumb particles, foaming tendency, quality of the polymer obtained, and waste water disposal, whereby good results are brought about.

After the polymerization step, the polymer solution is subjected to treatments such as termination of polymerization, washing, and deashing, as required, and then sent to the recovery stage of polymer.

In the polymer recovery stage according to the present invention, the polymer solution is stirred together with hot water in the presence of the above-mentioned block type polyether compound to strip the solvent and unreacted monomers, and the polymer is recovered as crumbs in good state. While the block type polyether compound is usually fed to the stripping tank in a form dissolved in hot water, it may be fed to the stripping tank as a mixture of a small amount of hot water containing the dispersing agent with the polymer solution in a form of dispersed state. The stripping operation may be either continuous or batchwise. The polymer made by the stripping into the form of crumbs dispersed in water is readily recovered by filtration or the like and is sent to the drying step. The water separated from the polymer particles can be recycled to the stripping tank as required to be used again.

The present invention is illustrated in more detail by way of Examples, but the invention is not limited thereto.

Example 1

In an 1-m$^3$ stainless steel made vessel, were placed 300 1 of water (21$^{\circ}$C) and 3 g of Pluronic ® F-68 (a block type polyether compound supplied by Asahi Denka Kogyo K.K.; average molecular weight, 8350; polyethylene glycol content, 80 wt%). While stirring, 65 Kg of hexane solution containing 6 Kg of EPM (intrinsic viscosity, 1.18; ethylene content, 75 wt%) and steam were introduced into the water phase. Thus, good crumbs of the EPM with particle sizes of 5 - 10 mm was obtained. No sticking was found among the crumbs or between the crumbs and walls of the vessel. Foaming was also not observed. The COD of the waste water was as low as 9 ppm.

Examples 2 and 3 and Comparative Examples 1 to 7

The results as shown in Table 1 were obtained by carrying out the experiments in the same manner as in Example 1 using as a dispersing agent the compouds as shown in Table 1.

When the block type polyether compounds represented by the formula $HO(C_2H_4O)_a(C_3H_6O)_b(C_2H_4O)_cH$ were used as dispersing agents as shown in Table 1, good crumbs of 5 - 10 mm particle sizes were obtained and foaming was not observed during the stripping. In addition, the COD of the waste water in each case was on a low level.

On the other hand, when stripping operations were carried out by use of other dispersing agents, the crumbs formed large lumps during the stripping, the transforming of the resulting slurry became impossible, and severe foaming occurred during the stripping. Thus, the effect of the stripping was decreased.

Moreover, the COD of the waste water in each test was as high as 150 - 230 ppm, which is a level industrially unallowable.

0044511

Table 1

| | Dispersing agent | |
| | Composition | Commercial name |
|---|---|---|
| Example 2 | Polethylene glycol-polypropylene glycol block copolymer (av.m.w., 10,800; polyethylene glycol content, 80 wt%) | Pluronic ® F-88 (produced by Asahi Denka Kogyo K.K.) |
| Example 3 | do. (av.m.w., 2,900; poly-ethylene glycol content, 40 wt%) | Pluronic ® L-64 (produced by Asahi Denka Kogyo K.K.) |
| Comparative Example 1 | Polypropylene glycol (av.m.w., 2,000) | |
| Comparative Example 2 | Polyethylene glycol (av.m.w., 1,000) | |
| Comparative Example 3 | Sodium dodecylbenzene-sulfonate | Neopelex ® (Kao Soap Co.) |
| Comparative Example 4 | Polyoxyethylene nonyl-phenyl ether | Emulgen ® 950 (Kao Soap Co.) |

Table 1 (Cont'd)

| Amount used * (ppm) | Polymer treated | COD of waste water (ppm) | State of crumbs at stripping step |
|---|---|---|---|
| 10 | EPDM: [η], 1.13; ethylene content, 54 wt%, iodine value, 8.5 | 8 | Good crumbs of 5-10 mm in size; no foaming |
| 100 | EPM: [η], 1.18; ethylene content, 75 wt% | 78 | do. |
| 120 | do. | 15 | Form lumps during stripping |
| 160 | do. | 140 | do. |
| 150 | do. | 133 | do. |
| 100 | do. | 90 | do. |

- Cont'd -

Table 1 (Cont'd)

| Compara-<br>tive<br>Example<br>5 | Polyoxyethylene lauryl<br>ether | Emulgen ® 120<br>(Kao Soap Co.) |
|---|---|---|
| Compara-<br>tive<br>Example<br>6 | Ester of sorbitan | Emasol ® 4130<br>(Kao Soap Co.) |
| Compara-<br>tive<br>Example<br>7 | Neutral fatty acid soap | |

* Content of dispersing agent in water at stripping
  step.

- Cont'd -

Tanble 1 (Cont'd)

| 300 | do. | 230 | Good crumbs of 5-10 mm in size; severe foaming |
|-----|-----|-----|-----|
| 300 | do. | ·83 | Form lumps during stripping |
| 100 | do. | 68 | do. |

- Cont'd -

WHAT IS CLAIMED IS:

(1)     In a process for recovering a rubberlike copolymer from a hydrocarbon or halogenated hydrocarbon solution of said rubberlike copolymer, said solution being obtained by copolymerizing ethylene and an α -olefin represented by the general formula $CH_2=CHR$, wherein R is a linear or branched alkyl group having 1 to 6 carbon atoms, or by copolymerizing these and a non-conjuated linear or cyclic diene, in the presence of a catalyst containing organoaluminum compound and vanadium compound, the improvement which comprise dispersing the rubberlike copolymer solution in hot water in the presence of a block type polyether compound represented by the general formula $HO(C_2H_4O)_a(C_3H_6O)_b(C_2H_4O)_cH$, wherein a, b, and c independently represent numbers of 10 to 1000, to strip the solvent and separating the resulting granular copolymer from water to obtain the copolymer in a granular form.

(2)     A process according to Claim 1, wherein a molecular weight of the polypropylene glycol segment in said block type polyether compound is 600 to 5000 and a content of the polyethylene glycol segment therein is 30 to 95% by weight.

(3)     A process according to Claim 1, wherein 3 to 200 ppm, based on the stripping water, of said block type polyether compound is used as dispersing agent.

(4)     A process according to Claim 1, wherein 5 to 100 ppm, based on the stripping water, of said block type polyether compound is used as dispersing agent.

(5)      A process according to Claim 1, wherein said ethylene-α-olefin copolymer or ethylene-α-olefin-non-conjugated diene copolymer to be subjected to steam stripping has an ethylene content of 85 to 20% by weight and an intrinsic viscosity (as measured in xylene at 70°C) of 0.9 to 2.5.

(6)      A process according to Claim 1, wherein said ethylene-α-olefin copolymer or ethylene-α-olefin-non-conjugated diene copolymer to be subjected to steam stripping has an ethylene content of 85 to 70% by weight and an intrinsic viscosity (as measured in xylene at 70°C) of 0.9 to 1.3.